# EUROPEAN PATENT SPECIFICATION

(11) **EP 0 478 154 B1**
(45) Date of publication and mention of the grant of the patent: **25.10.1995**
(21) Application number: 91308013.1
(22) Date of filing: 30.08.1991
(51) Int. Cl.: C04B 41/49, C03C 17/30

(54) **Method and means for incorporating functionality into an article, and the article so produced**
Verfahren und Mittel zum Einbringen von Gebrauchseigenschaften in einen Körper und der so hergestellte Körper
Méthode et moyens pour incorporer de la fonctionnalité dans un corps et le corps ainsi produit

(30) Priority: 30.08.1990 US 575052; 13.08.1991 US 744175
(43) Date of publication of application: 01.04.1992
(73) Proprietor: ELF ATOCHEM NORTH AMERICA, INC., Philadelphia Pennsylvania 19102-3222 (US)
(72) Inventor: Carson, Stephen William, Flemington, New Jersey 08822 (US); Dirkx, Ryan Richard, Belle Mead, New Jersey 08502 (US); Papanu, Victor Dennis, Doylestown, Pennsylvania 18901 (US)
(74) Representative: Stoner, Gerard Patrick

(56) References cited:
- EP-A- 0 234 024
- WO-A-91/00780
- FR-A- 2 496 090
- US-A- 3 801 361
- US-A- 3 873 352
- US-A- 4 342 796

## Description

This specification relates to methods for strengthening glass articles and to strengthened glass articles produced by such methods.

Glass is intrinsically one of the strongest materials known to man. Theoretically, standard silicate glasses should be able to support stresses as high as 14 to 20 gigapascals (2 to 3 million pounds per square inch [psi]). In practice, however, the strengths typically obtained are on the order of 70 megapascals (MPa), about 10,000 psi. The explanation of the discrepancy between predicted and measured values is the existence of surface flaws or cracks. These flaws essentially fracture the siloxane network (Si-O-Si), which is the backbone of the glass. This damage to the glass acts to concentrate any applied force, to the extent of causing catastropic failure of the glass article, typically at much lower stresses than otherwise expected. While described here for glass, this same theory can be applied to a wide variety of brittle materials not demonstrating significant plastic deformation prior to failure.

In the case of a glass container, the surface flaws or defects can originate from many sources, ranging from unmelted batch materials to scratches produced by sliding across hard surfaces, including other glass articles. In a typical container-manufacturing facility for example, the glass articles can be heavily damaged by handling from the moment they are formed. Contact with particulates and moisture in the air, other bottles, guide rails and other handling equipment, and the conveyor on which they are transported, can lead to large decreases in the strength of the container due to the flaws produced.

Researchers have long sought a means to alleviate the problems with practical glass strength. Many modifications to the forming and handling process have led to increases in the strength, but even these advances in handling still leave flaws in the surface. For this reason, considerable research effort has been directed at reducing the effect of flaws after they are inevitably formed on the object. The processes can generally be grouped into three main categories: surface treatments, thermal treatments, and surface coatings. This invention is an example of the latter, a coating being applied to the surface of the article after strength may already have been compromised.

Those skilled in the art will realize that by increasing the strength of a brittle article such as, e.g., glass, a lesser amount of material is needed in order to form an article of substantially equivalent strength and general mechanical performance. Thus, in the specific case of a glass bottle, for instance, the bottle can be lighter in weight than its untreated counterpart, or be of the same mass while exhibiting generally higher resistance to impact fracture or stress failure.

Some approaches to improving the strength of glass include Aratani et al., U.S. 4,859,636, wherein metal ions in the surface of glass are exchanged with ions of a larger radius to develop a surface compressive stress. Poole et al., U.S. 3,743,491, also develop a surface compressive stress, but provide a polymer overcoat to protect the surface from further abrasion.

Hashimoto et al., U.S. 4,891,241, treat the surface of the glass with a silane coupling agent followed by a polymer coating containing acryloyl and/or methacryloyl groups, followed by irradiation or thermal treatment to polymerize the molecules containing those groups.

While the patents described above each provide improvement to the strength of the glass so treated, they are not without shortcomings. Some of these treatments require longer times than available during manufacturing, necessitating off-line processing. There are also concerns related to worker safety and health. The use and handling of solvents, as well as the acrylate and methacrylate compounds, are of concern to the manufacturer, both from the standpoint of health and safety, and with respect to the treatment or disposal of spent materials.

US-A-3801361 proposes treating glass articles with an aqueous composition comprising polyethylene in combination with a silane, to provide the articles with a scratch-resistant and lubricious surface. The silane requires a C₁₂₋₁₈ alkyl or acyl group.

US-A-3873352 is similar, but the silane is an ethylenediaminopropyltrialkoxysilane or polyethyleneiminepropyltrialkoxysilane.

We now propose in one aspect a method of increasing the strength of a glass substrate, comprising
contacting the glass substrate with an aqueous solution of a silane compound selected from
vinyl trimethoxysilane
methyl trimethoxysilane
glycidoxypropyltrimethoxysilane
2-(3,4-epoxycyclohexyl)ethyltrimethoxysilane
methacryloxypropyltrimethoxysilane; and
heating and removing water to form a coating.

In another aspect we propose a strengthened glass article having a coating formed by contacting the article with an aqueous solution made by dissolving a silane compound selected from
vinyl trimethoxysilane
methyl trimethoxysilane
methacryloxypropyltrimethoxysilane;
and driving off water to form the coating.

Such a silane solution comprises monomers or oligomers containing SiOH groups, as the hydrolysis products of the silanes.

The alkoxysilanes are used in concentrations of from about 1wt%, preferably from 5 to 40wt%, most preferably from 7 to 25wt%.

The glass substrate may be a silicate glass.

The silane solution may be prepared and allowed to stand for a period of time which can range upward from about ten minutes. While not wishing to be bound by theory, it is surmised that this aging period permits the silane molecule to hydrolyze at least partially, to provide SiOH groups which may be transient or in equilibrium with other molecular species in the solution. The SiOH groups can then interact with each other or with groups on the surface of the treated substrate.

The aged solution is applied to the surface of the substrate by spraying, brushing, dipping, immersion, or any method which will serve to provide one or a plurality of effective coatings, including, e.g., multiple dipping or spraying. The application can be at any temperature convenient to the particular process; in the case of, e.g., glassware, application of the silane solution is preferably done at the exit, or cold, end of the annealing lehr. The resultant coating is then cured by the any one or a combination of standing at ambient temperature, or the application of energy such as, e.g., IR or UV. The preferred method of curing is by heating the coated article at from about 50 to 250 degrees centigrade.

Upon the application of the basic molecule or its hydrolyzate to the surface of the material to be coated, the resulting exterior surface serves as a material which provides the enhancement properties through the composite structure of substrate and coating. If the group is attached to or incorporated into R', that group may be hydrolysed off the parent silane molecule, but will nevertheless be present in the coating applied to the substrate.

As used in this specification, the term "solution" includes chemical solutions, suspensions, emulsions, and mixtures, any of which may exhibit complete or incomplete intermixing.

The aqueous silane solution is deposited onto the article surface by spraying, dripping, dipping, painting, or any other techniques suited to application of liquids, vapors, or aerosols. After deposition on the surface, what appears to be a condensation reaction leading to the formation of siloxane (Si-O-Si) bonds is induced by, e.g., microwave, IR, or UV irradiation or exposure to ambient or elevated temperatures at, above, or below atmospheric pressure.

Although not necessary to the utility of this invention, it is theorized that in silicate materials, notably glass, the polysiloxane linkage occurs within the coating, as well as between the coating and the surface. The silane coating, after bonding to the surface, can act, *inter alia,* to heal cracks in the surfaces by forming an Si-O-Si network across the flaw surfaces. The formation of the siloxane bonds in the region of the flaws apparently acts to provide an increase in the breaking stress of the article, e.g., a beer bottle or the like. Observed increases in strength by the application of the silane solutions of this invention have been over 350%.

It is also possible that the incorporation into the coating on the article of a molecular portion having, e.g. a significant opacity to UV provides protection against degradation of the contents of the bottle.

The substrate can be at any temperature above the freezing point of the solution, preferably from about 20 to about 200°C, and most preferably from about 25 to about 130 C.

Those skilled in the art will realize that other compounds can be added to the silane solution for the purpose of improving the wetting, as with surfactants. The nonionic surfactants are especially useful in this regard.

As noted herein, compounds can be added to the silane solution, which compounds are capable of interaction with the silanol group to form a copolymer structure or to form inter-penetrating structures which can be used in conjunction with the silanes. As noted above, unsaturation and other molecular functionality can be incorporated into the monomeric silane structure, or added to the solution in which the silane is present. Monomers which result in polymeric structures, such as, e.g., amino-formaldehyde, epoxies, and poly-acrylates can be especially useful.

In the examples given hereinbelow, the methods of preparing and testing samples are well known to those skilled in the art, and, forming no part of the invention as such, will not be detailed.

### A. STRENGTHENING

### Example I.

In this example, soda-lime glass rods are indented with a Vickers diamond to produce approximately 50-micro-meter (um) flaws in the surface. These rod samples are tested in bending and have average strengths of 56 MPa. Samples with identical flaws are spray-coated with a solution of 10 percent by weight (wt.%) of vinyl trimethoxysilane (VTMO) in water. The solution contains enough sulfuric acid to adjust the pH to between 3.0 and 3.4. The samples are thereafter heat-treated for 15 minutes (min.) at 200°C, and tested in bending. The average strength of these samples is found to increase from 56 MPa to 90 MPa.

### Example II.

Example II is a modification of Example I. In this example, the samples are again indented rods, and the solution is 10 wt.% VTMO, acidified as set forth in Example I. This solution also contains 0.75 wt.% of a nonionic surfactant. After curing, the indented samples increase in strength from 56 MPa to 93 MPa.

### Example III.

Example III is identical to Example I, with the exception that the silane used is methyltrimethoxysilane (MTMO). The control samples have an average strength of 62 MPa. Upon coating and curing, the bend strength increases to 96 MPa.

### Example IV.

Example IV is a duplication of Example II, using MTMO. The average control strengths are again 62 MPa, but the strengthened samples average 103 MPa.

### Examples V and VI.

Examples V and VI are duplicates of Examples I and II, respectively, with the exception that the silane used is methacryloxypropyltrimethoxysilane (MPTMO). For these examples, the average control strength is 60 MPa.

These coated samples are thermally cured as described above, but are also subjected to an additional UV irradiation in order to enhance the curing. The strengthened samples for Example V attain an average strength of 126 MPa, while those for Example VI reach 124 MPa.

### Example VII.

Rectangular bars are cut from a flat disc of Al₂O₃. Half of the samples as cut are broken by bending by an Instron testing machine with a crosshead speed of 50 millimeters per minute. The average strength of the samples is 23,340 psi, equal to 163 MPa.

The balance of the samples are spray-coated with a 10% solution of CETMO containing 0.025 wt.% of a nonionic surfactant and 0.025 wt.% of polyethylene emulsion. The solution is aged for two hours at room temperature prior to its application to the surface of the bar.

The samples are thermally cured after spray-coating. The cure is 15 minutes at 125°C followed by 10 min. at 225°C. The average strength of the treated samples is 28,230 psi, or 198 MPa; the increase in strength of the treated material over the untreated samples is 21%.

### B. ADDITIONAL PROPERTIES

### Example VIII. - Camouflage

Bottles which have been handled through a sufficient number of normal cleaning and refilling cycles to present a generally scuffed and worn appearance, are coated with a silane solution consisting of three silanes in in a solution of 10% total silanes in water. The 1:1:1 solution consists of glycidoxypropyl-trimethoxysilane (GPTMO), 2-(3,4-epoxycyclohexyl)ethyltrimethoxysilane (CETMO), and methyltrimethoxysilane (MTMO). The amount of each silane is about 3.33 wt.%. The solution contains enough sulfuric acid to bring the pH to between 3.0 and 3.4. A nonionic surfactant is added in the amount of 0.75 wt.% in order to increase wetting. The bottles so coated have the visual appearance of bottles which have been through only a minimal number of cleaning and refilling cycles.

### Modification of UV Transmission

### Example IX.

2-Hydroxy benzophenone, a molecule having the ability to screen UV, is incorporated into a GPTMO molecule. 1.85 grams (g) of that compound are added to 10 g of VTMO in solution, and the solution is allowed to stand at room temperature for 24 hours. The aged material is applied to a sheet of glass by dipping as set forth in Example I. After curing, the samples show a diminution in UV transmission.

### Example X.

2-Hydroxy benzophenone in alcohol solution is added to the solution described with respect to Example I, and the resultant material applied to a sheet of glass as set forth in Example II. The cured samples show substantially the same diminution of transmission of UV radiation as noted in Example IX.

### Lubricity

### Example XI.

Example XI is identical with Example VIII, with the exception that the silane solution used is CETMO further containing a polyethylene emulsion admixed therewith, and the bottles are not subject to repeated cycles of filling and cleaning. The control samples have a slip angle about 30°; the treated bottles have slip angles of about 10°.

### Example XII.

Samples of poly(methylmethacrylate) sheets are spray-coated with a solution of 10 wt.% of CETMO in water, containing also a polyethylene emulsion admixed therewith. The solution contains enough sulfuric acid to adjust the pH to between 3.0 and 3.4. The samples are thereafter heat-treated for 15 min. at 125°C., and then permitted to cool to room temperature. It is determined that the treated samples have lower friction between treated sheets than between untreated sheets.

### Color

### Example XIII.

A colorant comprising FD&C red #40 and FD&C red #3 is added to the coating solution containing the silanes of Example II, and the resulting material used to coat clear bottles by spraying. Upon heat-curing, the bottles have a uniform red coloring. The bottles also exhibit improved burst strength in comparison with control samples.

Those skilled in the art will understand that the cure step such methods may be effected by the application of energy of any sort ad magnitude sufficient to remove, e.g., water or other non-coating reaction product from the surface of a treated article, provided that such application is not deleterious to either the glass or the coating material. The curing step, being a combined function of energy and time, can include a low magnitude of energy and a relatively long time, or the reverse, an application of energy limited as noted hereinabove, for a relatively short period of time.

## Claims

1. A method of increasing the strength of a glass substrate, comprising
contacting the glass substrate with an aqueous solution of a silane compound selected from
vinyl trimethoxysilane
methyl trimethoxysilane
glycidoxypropyltrimethoxysilane
2-(3,4-epoxycyclohexyl)ethyltrimethoxysilane
methacryloxypropyltrimethoxysilane; and
heating and removing water to form a coating.

2. A method according to claim 1 in which the glass substrate strength is further increased by irradiating the coating with ultraviolet radiation.

3. A method according to claim 1 or claim 2 in which the silane is vinyltrimethoxysilane.

4. A method according to claim 1 or claim 2 in which the silane is methyl trimethoxysilane.

5. A method according to claim 1 or claim 2 in which the silane is methacryloxypropyltrimethoxysilane.

6. A strengthened glass article having a coating formed by contacting the article with an aqueous solution made by dissolving a silane compound selected from
vinyl trimethoxysilane
methyl trimethoxysilane
methacryloxypropyltrimethoxysilane; and driving off water to form the coating.

7. A strengthened glass article according to claim 6 in which the coating has been irradiated with ultraviolet radiation to further increase the strength of the article.

## Patentansprüche

1. Verfahren zur Erhöhung der Festigkeit eines Glassubstrats, umfassend das Inkontaktbringen des Glassubstrats mit einer wäßrigen Lösung einer Silanverbindung, ausgewählt aus
Vinyltrimethoxysilan
Methyltrimethoxysilan
Glycidoxypropyltrimethoxysilan
2-(3,4-Epoxycyclohexyl)ethyltrimethoxysilan
Methacryloxypropyltrimethoxysilan;
und das Erhitzen und das Entfernen von Wasser, um einen Überzug herzustellen.

2. Verfahren nach Anspruch 1, dadurch **gekennzeichnet,** daß die Festigkeit des Glassubstrats durch Bestrahlen des Überzugs mit ultravioletter Strahlung weiter erhöht wird.

3. Verfahren nach Anspruch 1 oder 2, dadurch **gekennzeichnet,** daß das Silan Vinyltrimethoxysilan ist.

4. Verfahren nach Anspruch 1 oder 2, dadurch **gekennzeichnet,** daß das Silan Methyltrimethoxysilan ist.

5. Verfahren nach Anspruch 1 oder 2, dadurch **gekennzeichnet,** daß das Silan Methacryloxypropyltrimethoxysilan ist.

6. Verstärkter Glasgegenstand mit einem Überzug, der hergestellt worden ist durch Inkontaktbringen des Gegenstands mit einer wäßrigen Lösung, hergestellt durch Auflösen einer Silanverbindung, ausgewählt aus
Vinyltrimethoxysilan
Methyltrimethoxysilan
Methacryloxypropyltrimethoxysilan;
und durch Austreiben des Wassers, um einen Überzug herzustellen.

7. Verstärkter Glasgegenstand nach Anspruch 6, dadurch **gekennzeichnet,** daß die Beschichtung mit ultravioletter Strahlung bestrahlt worden ist, um die Festigkeit des Gegenstands weiter zu erhöhen.

## Revendications

1. Procédé pour accroître la résistance mécanique d'un substrat en verre, comprenant
la mise en contact du substrat en verre avec une solution aqueuse d'un silane choisi entre
le vinyltriméthoxysilane
le méthyltriméthoxysilane
le glycidoxypropyltriméthoxysilane
le 2-(3,4-époxyclohexyl)éthyltriméthoxysilane
le méthacryloxypropyltriméthoxysilane ;
et
le chauffage et l'élimination de l'eau pour former un revêtement.

2. Procédé suivant la revendication 1, dans lequel la résistance mécanique du substrat en verre est accrue en outre par irradiation du revêtement avec un rayonnement ultraviolet.

3. Procédé suivant la revendication 1 ou la revendication 2, dans lequel le silane consiste en vinyltriméthoxysilane.

4. Procédé suivant la revendication 1 ou la revendication 2, dans lequel le silane consiste en méthyltriméthoxysilane.

5. Procédé suivant la revendication 1 ou la revendication 2, dans lequel le silane consiste en méthacryloxypropyltriméthoxysilane.

6. Article en verre de résistance mécanique accrue, portant un revêtement formé en mettant en contact l'article avec une solution aqueuse préparée en dissolvant un silane choisi entre
le vinyltriméthoxysilane
le méthyltriméthoxysilane
le méthacryloxypropyltriméthoxysilane ;
et en chassant l'eau pour former le revêtement.

7. Article en verre de résistance mécanique accrue selon la revendication 6, dans lequel le revêtement a été irradié avec un rayonnement ultraviolet pour accroître davantage la résistance mécanique de l'article.
